# EUROPEAN PATENT APPLICATION

(11) **EP 3 016 123 A1**
(43) Date of publication of application: **04.05.2016**
(21) Application number: 15191621.0
(22) Date of filing: 27.10.2015
(51) Int. Cl.: H01H 33/06, H01H 33/55, H01H 33/68

(54) **SWITCH APPARATUS FOR HIGH PRESSURE ENVIRONMENTS AND SYSTEM HAVING THE SAME**

(30) Priority: 31.10.2014 CN 201410605171
(71) Applicant: GE Energy Power Conversion Technology Ltd, Rugby Warwickshire CV21 1BU (GB)
(72) Inventor: SIHLER, Christof, 12309 Berlin (DE); MAO, Saijun, Shanghai 31 201203 (CN); SHEN, Jie, Shanghai 31 201203 (CN)
(74) Representative: Serjeants LLP

(57) **Abstract**

A switch apparatus (14) is provided. The switch apparatus (14) includes a switch main body (30), a switch actuator (32), a housing (34) and at least one pressure compensator (36). The switch main body (30) includes a movable contact (48) and a static contact (46). The switch actuator (32) is coupled with the switch main body (30) and configured to trigger movement of the movable contact (48). The housing (34) accommodates the switch main body (30) and the switch actuator (32) and is filled with insulation liquid. The pressure compensator (36) is in liquid communication with the housing (34) and has a variable volume to regulate pressure inside the housing equal to be substantially equal to external pressure surrounding the housing.

## Description

### BACKGROUND

Embodiments of the disclosure relate generally to a switch apparatus and a system having the same, and more particularly to a switch apparatus for high pressure environments.

As oil and gas fields in shallow waters diminish, producers are tapping offshore fields in deeper waters with oil and gas production installations that operate far below the surface of the sea. The oil and gas production installations operate not only far below the surface of the sea but also far away from the shore. The oil and gas production installations use power transmission and distribution systems for delivery of electric power to subsea locations. A subsea switch is one of the key subcomponents for the power transmission and distribution system. Current subsea switches of the power transmission and distribution systems are completely assembled in bar vessels. As the sea depth increase, the bar vessels gradually become heavy and unwieldy modules to against subsea high pressure.

It is desirable to provide a solution to address at least one of the above-mentioned problems.

### BRIEF DESCRIPTION

A switch apparatus is provided. The switch apparatus includes a switch main body, a switch actuator, a housing and at least one pressure compensator. The switch main body includes multiple of contacts. The switch actuator is coupled with the switch main body and configured to trigger movement of the contacts. The housing accommodates the switch main body and the switch actuator and is filled with insulation liquid. The pressure compensator is in liquid communication with the housing and has a variable volume to regulate pressure inside the housing equal to external pressure surrounding the housing.

A system is provided. The system includes a main apparatus, a switch apparatus, and a circuit breaking device. The main apparatus is for use in an underwater environment. The switch apparatus is coupled to the main apparatus and exposed to the underwater environment and includes a switch main body, a switch actuator, a housing and at least one pressure compensator. The switch main body includes multiple of contacts. The switch actuator is coupled with the switch main body and configured to trigger movement of the contacts. The housing accommodates the switch main body and the switch actuator and is filled with insulation liquid. The pressure compensator is in liquid communication with the housing and has a variable volume to regulate pressure inside the housing equal to external pressure surrounding the housing. The circuit breaking device is coupled with the switch apparatus for breaking a circuit.

### DRAWINGS

These and other features and aspects of embodiments of the present invention will become better understood when the following detailed description is read with reference to the accompanying drawings in which like characters represent like parts throughout the drawings, wherein:
FIG. 1 is a schematic view of a power transmission and distribution system according to one embodiment;
FIG. 2 is a circuit diagram of a switch apparatus and a power conversion system of the power transmission and distribution system according to one embodiment;
FIG. 3 is a circuit diagram of the switch apparatus and the power conversion system according to another embodiment;
FIG. 4 is a schematic view of the switch apparatus according to one embodiment;
FIG. 5 is a schematic view of the switch apparatus according to another embodiment, wherein the switch apparatus is in an open state; and
FIG. 6 is a schematic view of the switch apparatus of FIG. 5, wherein the switch apparatus is in a closed state.

### DETAILED DESCRIPTION

Unless defined otherwise, technical and scientific terms used herein have the same meaning as is commonly understood by one of ordinary skill in the art to which this invention belongs. The terms "a" and "an" do not denote a limitation of quantity, but rather denote the presence of at least one of the referenced items, and terms such as "front", "back", "bottom", and/or "top", unless otherwise noted, are merely used for convenience of description, and are not limited to any one position or spatial orientation. Moreover, the terms "coupled" and "connected" are not intended to distinguish between a direct or indirect coupling/connection between two components. Rather, such components may be directly or indirectly coupled/connected unless otherwise indicated.

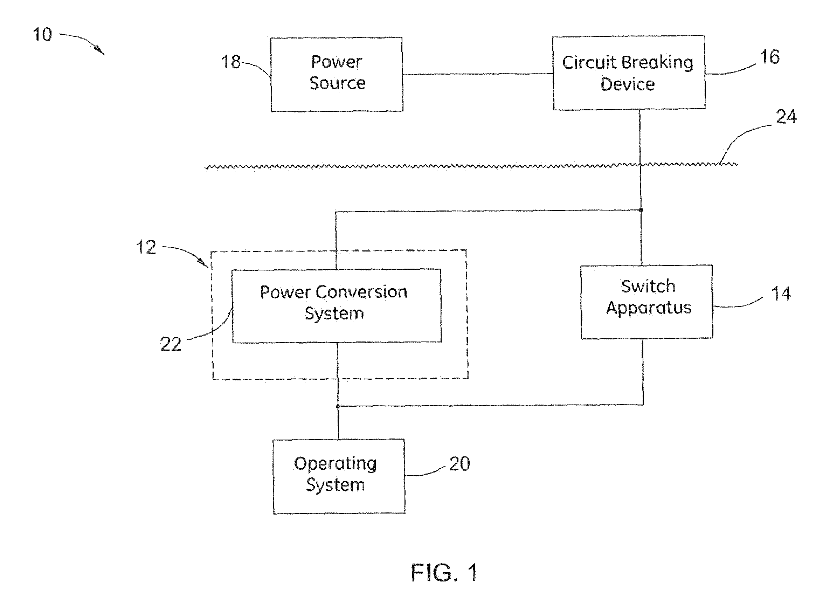

FIG. 1 illustrates a schematic view of a power transmission and distribution system 10 according to one embodiment. In the illustrated embodiment, the power transmission and the distribution system 10 includes a main apparatus 12, a switch apparatus 14, a circuit breaking device 16 and a power source 18. The power transmission and distribution system 10 is operated to convert and supply power to an operating system 20. The operating system 20 may be a system which operates in subsea environment for oil exploitation, for example.

The main apparatus 12 is for use in an underwater environment, such as a subsea environment, and includes a power conversion system 22 in this embodiment. The power conversion system 22 is operative to convert power from the power source 18 for the operating system 20. In one embodiment, the power source 18, for example an AC generator, supplies high voltage AC power, and the power conversion system 22 converts the high voltage AC power to high voltage DC power. In another embodiment, the power source 18 supplies high voltage DC power, and the power conversion system 22 converts the high voltage DC power to high voltage AC power. The high voltage is at least 5 kV and current is above 100 A, for example. In another embodiment, the power source 18 supplies one type of DC power, and the power conversion system 22 converts the one type of DC power to another type of DC power. In another embodiment, the power source 18 supplies one type of AC power, and the power conversion system 22 converts the one type of AC power to another type of AC power. The power conversion system 22 may include a converter or an inverter. In another embodiment, the main apparatus 12 may include one or more other systems/components (not shown) coupled with the power conversion system 22, such as rectifier.

The switch apparatus 14 is coupled to the main apparatus 12 and exposed to the underwater environment. In one embodiment, the switch apparatus 14 is located subsea. In this embodiment, the switch apparatus 14 is coupled in parallel to the power conversion system 22 and operative to bypass the power conversion system 22. In another embodiment, the switch apparatus 14 is coupled in series to the power conversion system 22 to isolate the power conversion system 22. In another embodiment, more than one switch apparatus 14 are employed to bypass or isolate the main apparatus 12. In another embodiment, more than one power conversion system 22 is employed. Even if one faulty power conversion system 22 is bypassed or isolated by the switch apparatus 14, other power conversion systems 22 still operate normally. The switch apparatus 14 is employed to promote protection for the system when the main apparatus 12 is faulty, such as open circuit fault. In one embodiment, the switch apparatus 14 is a DC switch apparatus having an operation voltage of at least 5 kV. The switch apparatus 14 is operating in a high voltage DC power system with at least 5 kV.

The circuit breaking device 16 is coupled with the switch apparatus 14 for breaking a circuit. In this embodiment, the circuit breaking device 16 is coupled with the power conversion system 22. For example, when a fault occurs at the main apparatus 12, the switch apparatus 14 bypasses the main apparatus 12, and the circuit breaking device 16 connected with the switch apparatus 14 may break the circuit to stop power from the power source 18 to the power conversion system 22 and the switch apparatus 14 so as to protect the system 10. In one embodiment, the circuit breaking device 16 includes one or more breaking circuits. In one embodiment, the circuit breaking device 16 is integrated in the power source 18. In this embodiment, the circuit breaking device 16 and the power source 18 are located topside. As used herein, the term "topside" means above the waterline 24. In some embodiments, the power source 18, the circuit breaking device 16, the power conversion system 22, the switch apparatus 14 and/or the operating system 20 are controlled by a controller (not shown).

The switch apparatus 14 may be used in other applications but not limited to the embodiment of FIG. 1. The switch apparatus 14 can operate in subsea high pressure environment, for example a 3 km deep sea and about 30 MPa (300 bar) high pressure environment. Details of the switch apparatus 14 will be described in subsequent paragraphs.

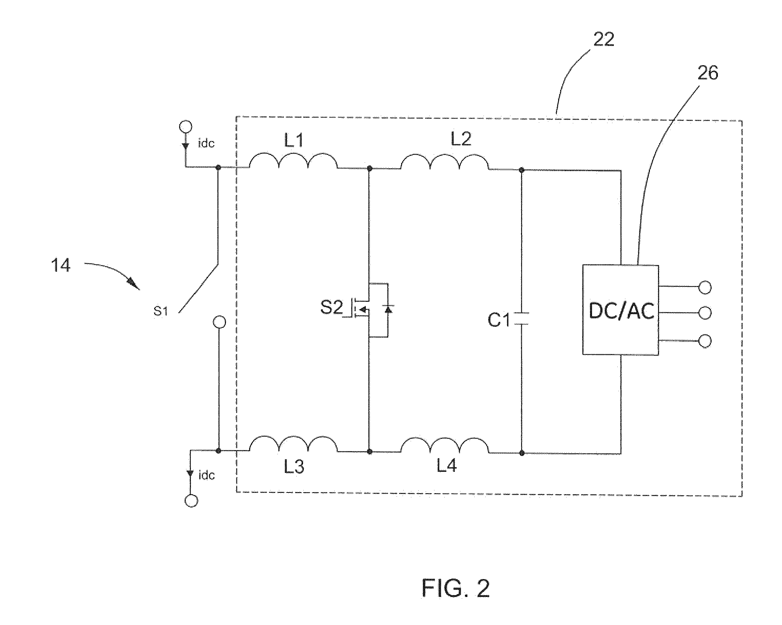

FIG. 2 illustrates a circuit diagram of the switch apparatus 14 and the power conversion system 22 according to one embodiment. The switch apparatus 14 includes a switch S1 coupled in parallel to the power conversion system 22 and coupled in series with the power source 18 and the circuit breaking device 16. The switch S1 is open during normal operation of the power conversion system 22, and the switch S 1 is closed when the power conversion system 22 is faulty to bypass the power conversion system 22 and ensure continuous point-to-point power flow. The switch S1 may be a mechanical DC switch in one embodiment. In another embodiment, the switch S1 may be an AC switch. In another embodiment, the switch S1 may be an electric switch.

In the illustrated embodiment, the power conversion system 22 includes an inverter 26, a solid state switch S2, inductances L1-L4 and a capacitance C1. The inverter 26 and the capacitance C1 are coupled in parallel and the capacitance C1 serves as a bus filter. The inductances L1-L4 serve as cable parasitic inductances. The solid state switch S2 is coupled in parallel to the capacitance C1. The solid state switch S2 is open during normal operation of the inverter 26, and the solid state switch S2 is closed when a fault occurs at the inverter 26. The solid state switch S2 can be turned on more quickly than the switch S 1, however power loss at the solid state switch S2 is much higher than the power loss at the switch S 1. When the fault occurs, the switch S 1 is closed after the solid state switch S2 is closed, and then the solid state switch S2 may be opened after the switch S 1 is closed.

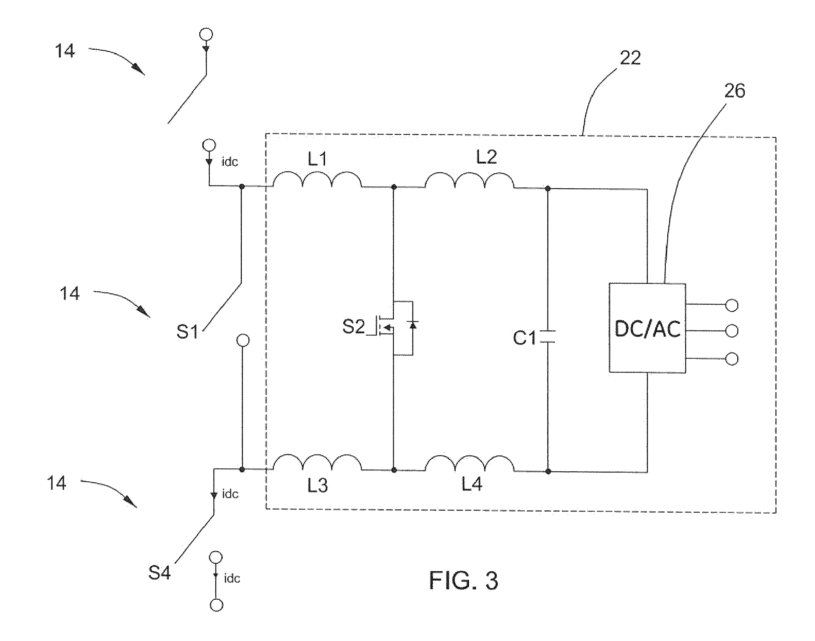

FIG. 3 illustrates a circuit diagram of the switch apparatuses 14 and the power conversion system 22 according to another embodiment. In this embodiment, three switch apparatuses 14 are employed which respectively include switches S1, S3 and S4. The switch S1 is similar to the switch S1 in FIG. 2 which is operative to bypass the power conversion system 22. The power conversion system 22 in FIG. 3 is similar to the power conversion system 22 in FIG. 2. The switches S3 and S4 are coupled in series with the switch S1 and operative to isolate the power conversion system 22. The switches S3 and S4 are closed during normal operation of the power conversion system 22, and the switches S3 and S4 are open when the power conversion system 22 is open-circuited to avoid the rest of the system 10 getting affected by the fault. In one embodiment, the switches S3 and S4 may have similar configuration as the switch S1. The circuit of the power conversion system 22 in FIGS. 2 and 3 may be varied according to particular applications.

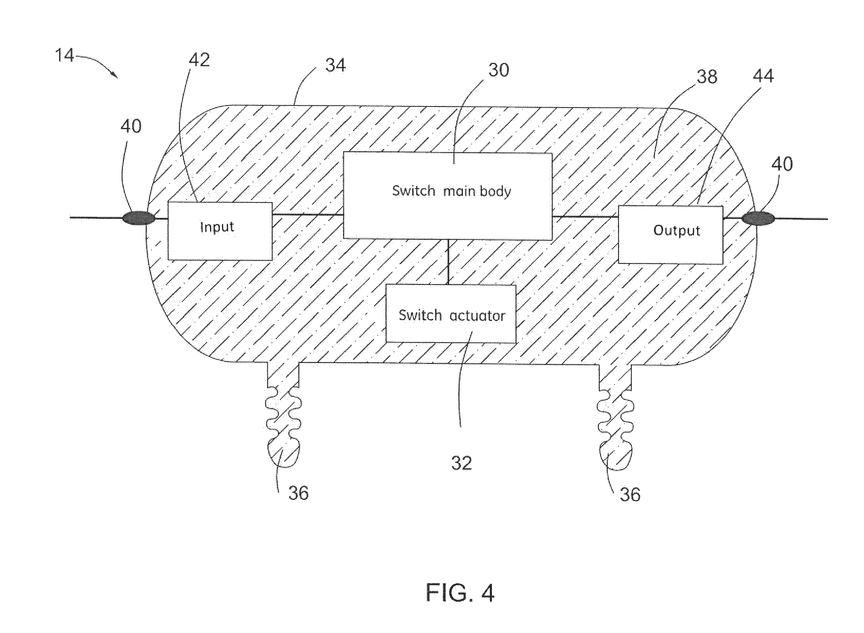

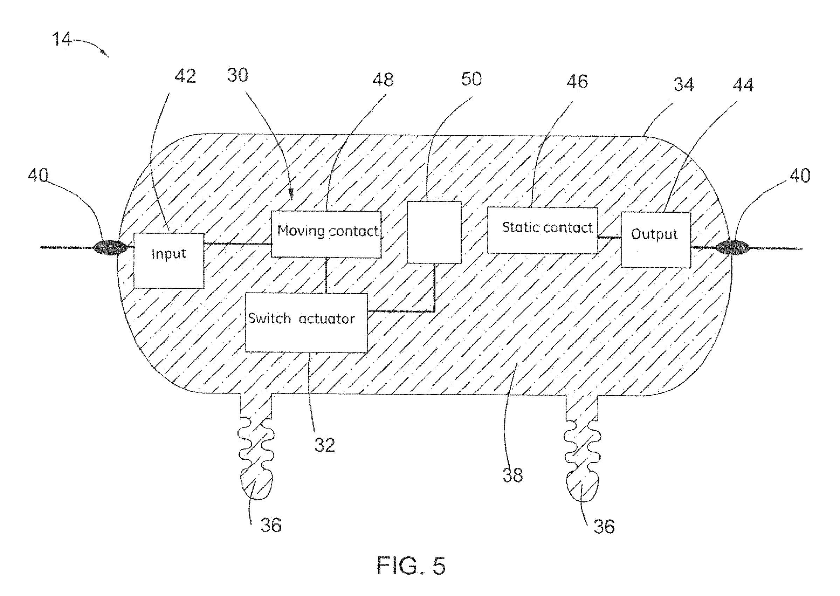

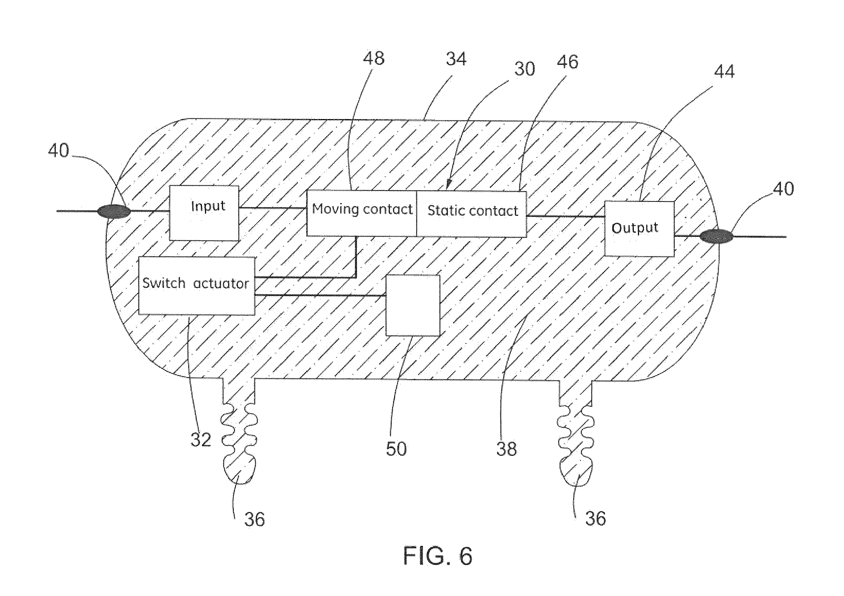

FIG. 4 illustrates a schematic view of the switch apparatus 14 according to one embodiment. The switch apparatus 14 includes a switch main body 30, a switch actuator 32, a housing 34 and at least one pressure compensator 36. The switch main body 30 has a closed state and an open state. The switch main body 30 includes multiple contacts, for example a moving contact 48 and a static contact 46 shown in FIGS. 5 and 6. In one embodiment, the switch main body 30 may operate at high voltage. The switch actuator 32 is coupled with the switch main body 30 and configured to trigger movement of the contacts. The switch actuator 32 drives the contacts moving between a closed position and an open position to make the switch main body 30 closed or open. The switch actuator 32 may drive the contacts through worm, magnetism or any other manners.

The housing 34 accommodates the switch main body 30 and the switch actuator 32 and is filled with insulation liquid 38. The housing 34 may be made of metal such as alloy steel, titanium alloy. In one embodiment, the housing 34 includes a cylindrical or spherical outer enclosure such that high intensity of pressure at some portions of the housing 34 is avoided. In another embodiment, the housing 34 may include any other smooth curved surface. The housing 34 is totally filled with the insulation liquid 38, and the switch main body 30 and the switch actuator 32 are totally immersed in the insulation liquid 38. The insulation liquid 38 provides an uncompressible feature, in such a way that voids inside the housing 34 are avoided to handle the subsea high pressure.

In this embodiment, the insulation liquid 38 is not pressurized when being injected into the housing 34. The pressure of the insulation liquid 38 inside the housing 34 is changed as the pressure of the external environment surrounding the housing 34. The pressure of the insulation liquid 38 is substantial same as the pressure of the external environment. For example, the pressure of the insulation liquid 38 is about 30 MPa (300 bar) when the switch apparatus 14 is in 3 km deep sea and the pressure of the external environment is about 30 MPa (300 bar). Accordingly, the housing 34 with a thin wall can handle the high pressure due to the insulation liquid 38, so that weight and volume of the switch apparatus 14 are reduced a lot.

In one embodiment, a dielectric strength of the insulation liquid 38 is in the range of 1kV/mm to /100kVmm. In one embodiment, the insulation liquid 38 includes at least one of mineral oils, silicone oils, MIDEL oil, organic esters and synthetic oils, which have high breakdown strength and are provided after vacuuming and filtering. In another embodiment, the insulation liquid 38 may include any other types of dielectric oils, or other fluid with similar dielectric strengths. The insulation liquid 38 provides high voltage insulation medium.

In one embodiment, the switch main body 30 and the switch actuator 32 are pressure tolerant. The switch actuator 32 and the switch main body 30 include one or more pressure tolerant components (not shown) immerged in the insulation liquid 38. The components of the switch main body 30 and the switch actuator 32 do not have a void with air or vacuum therein, that is to say the void of the components are filled with the insulation liquid 38. The components include, for example, pressure tolerant capacitances and inductances. The insulation liquid 38 surrounds the pressure tolerant components of the switch main body 30 and the switch actuator 32. In another embodiment, the switch actuator 32 may be pressure sealed against the high pressure by a differential pressure barrier (not shown) so that the switch actuator 32 may employ non-pressure tolerant components. The differential pressure barrier may have thick metal walls.

The pressure compensators 36 are in liquid communication with the housing 34 and have a variable volume to regulate the pressure inside the housing 34 equal to external pressure surrounding the housing 34. The pressure compensators 36 are filled with the insulation liquid 38 and are transformable according to the external pressure. The pressure compensators 36 are made of elastic material, such as rubber. In one embodiment, the pressure compensators 36 include transformable bellows. In another embodiment, the pressure compensators 36 may include any other devices which have variable volume. The volume of the insulation liquid 38 may be changed because of external temperature or pressure, and the volume of the pressure compensators 36 is changed as the change of the volume of the insulation liquid 38 to balance the pressure of the insulation liquid 38 and the pressure surrounding the housing 34.

In the illustrated embodiment, the switch apparatus 14 includes one or more connectors 40 liquid hermetically coupled to the housing 34 and electrically connected with the switch main body 30. In this embodiment, the switch apparatus 14 includes an input circuit 42 and an output circuit 44, for example filter circuit, rectifying circuit, respectively coupled to the switch main body 30. The connectors 40 are respectively coupled to the input circuit 42 and the output circuit 44. The connectors 40 and the housing 34 are liquidly sealed such that the insulation liquid 38 is sealed in the housing 34. The connectors 40 may include a connector with low pressure difference because the pressure inside the housing 34 is substantially equal to the pressure outside and surrounding the housing 34. In one embodiment, the switch apparatus 14 may include any other devices or components.

FIG. 5 illustrates a schematic view of the switch apparatus 14 according to another embodiment. In this embodiment, the switch main body 30 includes a moving contact 48, a static contact 46, and a solid insulator 50. In this embodiment, the switch actuator 32 is coupled to the moving contact 48 to drive the moving contact 48 to move close to or away from the static contact 46 and thus, to connect or disconnect the moving contact 48 and the static contact 46. The static contact 46 is stationary. In another embodiment, the switch main body 30 includes two moving contacts which may be moved by the switch actuator 32 close to or away from each other.

The solid insulator 50 is moveable between the contacts 48 and 46, and operative to insulate the contacts 48 and 46. The dielectric strength of the solid insulator 50 is in the range of 80 kV/mm to 120 kV/mm. The solid insulator 50 is made of insulation material. In one embodiment, the material of the solid insulator 50 includes at least one of polypropylene, polytetrafluoroethylene (PTFE), poly dicyclopentadien (DCPD), solithane and silicon. In another embodiment, the solid insulator 50 may include any other solid insulation material with similar dielectric strengths.

In FIG. 5, the switch apparatus 14 is in the open state. The solid insulator 50 is positioned between the moving contact 48 and the static contact 46 to guarantee high dielectric strength insulation therebetween. The switch actuator 32 is coupled with the solid insulator 50 to trigger movement of the solid insulator 50. FIG. 6 illustrates the switch apparatus 14 in the closed state. In one embodiment, the switch actuator 32 moves the solid insulator 50 away from the moving contact 48 and the static contact 46, and the switch actuator 32 moves the moving contact 48 connecting with the static contact 46 so as to close the switch apparatus 14.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A switch apparatus (14), e.g., a subsea switch, comprising:
a switch main body (30) comprising a plurality of contacts (46, 48);
a switch actuator (32) coupled with the switch main body (30) and configured to trigger the plurality of contacts (46. 48);
a housing (34) accommodating within its interior the switch main body (30) and the switch actuator (32) and filled with insulation liquid (38); and
at least one pressure compensator (36) in liquid communication with the interior of the housing (34) and having a variable volume to regulate pressure inside the housing (34) to be substantially equal to external pressure surrounding the housing (34).

2. A switch apparatus (14) according to claim 1, further comprising a solid insulator (50) being moveable between the plurality of contacts (46, 48) and operative to insulate the plurality of contacts (46, 48).

3. A switch apparatus (14) according to claim 2, wherein the solid insulator (50) has a dielectric strength in the range of about 80 kV/mm to about 120 kV/mm.

4. A switch apparatus (14) according to claim 2 or claim 3, wherein the solid insulator (50) comprises at least one of polypropylene, polytetrafluoroethylene (PTFE), poly dicyclopentadien (DCPD), solithane and silicon.

5. A switch apparatus (14) according to any of claims 2 to 4, wherein the switch actuator (32) is coupled with the solid insulator (50) to trigger movement of the solid insulator (50) between a first position where the solid insulator (50) is positioned between the plurality of contacts (46, 48) and a second position where the solid insulator (50) is not positioned between the plurality of contacts (46, 48).

6. A switch apparatus (14) according to any preceding claim, wherein the plurality of contacts includes a movable contact (48) and the switch actuator (32) is coupled with the movable contact (48) to trigger movement of the movable contact (48).

7. A switch apparatus (14) according to claim 6, wherein the plurality of contacts includes a static contact (46) and wherein the switch actuator (32) triggers movement of the movable contact (48) between a first position where the movable contact (48) is spaced apart from the static contact (46) such that the switch apparatus (14) is in an open state and a second position where the movable contact (48) is in contact with the static contact (46) such that the switch apparatus (14) is in a closed state.

8. A switch apparatus according to claim 6, wherein the plurality of contacts includes a pair of movable contact and wherein the switch actuator is coupled with the pair of movable contacts to trigger movement of the movable contacts between a first position where the pair of movable contacts are spaced apart such that the switch apparatus is in an open state and a second position where the pair of movable contacts are in contact with each other such that the switch apparatus is in a closed state.

9. A switch apparatus (14) according to any preceding claim, wherein dielectric strength of the insulation liquid is in the range of about 1 kV/mm to about 100 kV/mm.

10. A switch apparatus (14) according to any preceding claim, wherein the insulation liquid comprises at least one of a mineral oil, silicone oil, MIDEL oil, organic ester and synthetic oil.

11. A switch apparatus (14) according to any preceding claim, further comprising one or more connectors (40) hermetically coupled to the housing (34) and electrically connected with the switch main body (30).

12. A switch apparatus (14) according to any preceding claim, wherein the housing (34) comprises a substantially cylindrical or substantially spherical outer enclosure.

13. A switch apparatus (14) according to any preceding claim, wherein the switch actuator (32) comprises one or more pressure-tolerant components immersed in the insulation liquid.

14. A switch apparatus (14) according to any preceding claim, being a DC switch apparatus having an operation voltage of at least 5 kV.

15. A system (10) comprising:
a main apparatus (12) in an underwater environment;
a switch apparatus (14) according to any preceding claim coupled to the main apparatus and exposed to the underwater environment; and
a circuit breaking device (16) coupled with the switch apparatus (14) for breaking a circuit.
